# EUROPEAN PATENT APPLICATION

(11) **EP 4 545 842 A1**
(43) Date of publication of application: **30.04.2025**
(21) Application number: 22948060.3
(22) Date of filing: 16.12.2022
(51) Int. Cl.: F17D 5/02, F16L 11/12, F16L 11/133, F16L 55/00, G06K 7/10

(54) **MARINE HOSE MONITORING SYSTEM AND METHOD**

(30) Priority: 22.06.2022 JP 2022100070
(71) Applicant: The Yokohama Rubber Co., Ltd., Hiratsuka-shi, Kanagawa 254-8601 (JP)
(72) Inventor: ISHIBASHI, Yusuke, Hiratsuka-shi, Kanagawa 254-8601 (JP)
(74) Representative: Grünecker Patent- und Rechtsanwälte PartG mbB
(86) International application number: PCT/JP2022/046532
(87) International publication number: WO 2023/248501

(57) **Abstract**

Provided is a monitoring system and method capable of more easily grasping internal and external states of a marine hose. With a drone (21) moved into the airspace above and near an IC tag (11) placed on a surface of a marine hose (1), a detection result regarding a detection indicator from a detector (10) is transmitted through a return radio wave (R2) transmitted, in response to the transmission radio wave (R1), to the communication unit (19) from the IC tag (11) activated by a transmission radio wave (R1) transmitted from a communication unit (19) installed on the drone (21) and is input into a calculation device (20) as acquired data. The calculation device (20) determines an internal state of the marine hose (1) based on a magnitude of a difference between the acquired data and reference data. The calculation device (20) also determines an external state of the marine hose (1) based on a difference between image data acquired by the camera device (22) while the drone (21) is in airspace above the marine hose (1) and reference image data.

## Description

### Technical Field

The present invention relates to a system and method for monitoring a marine hose.

### Background Art

Various methods and devices for detecting the presence or absence of fluid leakage from a marine hose have been proposed (see, for example, Patent Document 1). The method proposed in Patent Document 1 utilizes a passive IC tag placed in a fluid retention layer of a marine hose. The IC tag receives a transmission radio wave transmitted from a detector outside the marine hose, and the detector receives a return radio wave transmitted by the IC tag in response to the transmission radio wave. The presence or absence of fluid leakage from the marine hose is determined based on the strength of the return radio wave received by the detector.

According to this method, the presence or absence of fluid leakage can be easily detected by wireless communication between the IC tag and the detector, regardless of the level of measurement skill of a worker. However, since the passive IC tag is used, in performing wireless communication between the IC tag and the detector, the worker needs to get close to the marine hose and place the detector in a position from about 1 m to 2 m from the IC tag. This method can grasp the presence or absence of fluid leakage as the internal state of the marine hose but cannot grasp the external state of the marine hose. Thus, there is room for improvement in more easily grasping the internal and external states of the marine hose.

### Citation List

### Patent Literature

Patent Document 1: JP 2020-133766 A

### Summary of Invention

### Technical Problem

An object of the present invention is to provide a system and method for monitoring a marine hose that can more easily grasp the internal and external states of the marine hose.

### Solution to Problem

To achieve the object described above, a system for monitoring a marine hose of an embodiment of the present invention is a system for monitoring a marine hose including a hose body in which a reinforcing layer and a buoyant layer are layered between an inner surface layer and an outer surface layer in order from an inner circumferential side and connection fittings connected to both respective end portions of the hose body in a longitudinal direction, the inner surface layer including an inner circumferential region as a flow path. The system includes: the marine hose; a detector including an IC tag of a passive type and a sensor unit connected to the IC tag; a drone on which a communication unit configured to wirelessly communicate with the IC tag and a camera device are installed; and a calculation device into which acquired data from the communication unit and image data from the camera device are input. The IC tag is placed on a surface of the marine hose, and the detector is configured to detect a detection indicator preset inside the hose body. With the drone moved into airspace above and near the IC tag, the IC tag is activated by a transmission radio wave transmitted from the communication unit, and wireless communication is performed between the IC tag and the communication unit by a return radio wave being transmitted from the IC tag activated in response to the transmission radio wave. When the IC tag is activated, a detection result regarding the detection indicator from the detector is transmitted from the IC tag to the communication unit through the return radio wave and is input into the calculation device as the acquired data. The calculation device determines an internal state of the marine hose due to the detection indicator based on a magnitude of a difference between the acquired data input and preset reference data. The calculation device also determines an external state of the marine hose based on a difference between the image data acquired by the camera device while the drone is in airspace above the marine hose and preset reference image data.

A method for monitoring a marine hose of an embodiment of the present invention is a method for monitoring a marine hose including a hose body in which a reinforcing layer and a buoyant layer are layered between an inner surface layer and an outer surface layer in order from an inner circumferential side and connection fittings connected to both respective end portions of the hose body in a longitudinal direction, the inner surface layer including an inner circumferential region as a flow path. The method includes: using a detector including an IC tag of a passive type and a sensor unit connected to the IC tag, a drone on which a communication unit configured to wirelessly communicate with the IC tag and a camera device are installed, and a calculation device into which acquired data from the communication unit and image data from the camera device are input; placing the IC tag on a surface of the marine hose and the detector configured to detect a detection indicator preset inside the hose body; with the drone moved into airspace above and near the IC tag, activating the IC tag with a transmission radio wave transmitted from the communication unit and performing wireless communication between the IC tag and the communication unit by transmitting a return radio wave from the IC tag to the communication unit in response to the transmission radio wave; when activating the IC tag, transmitting from the IC tag to the communication unit through the return radio wave and inputting a detection result regarding the detection indicator from the detector into the calculation device as the acquired data; determining, by the calculation device, an internal state of the marine hose due to the detection indicator based on a magnitude of a difference between the acquired data input and preset reference data; and determining, by the calculation device, an external state of the marine hose based on a difference between the image data acquired by the camera device while the drone is in airspace above the marine hose and preset reference image data.

### Advantageous Effects of Invention

According to the present invention, by performing wireless communication between the IC tag and the communication unit while the drone is moved into the airspace above and near the IC tag, the detection result regarding the detection indicator by the detector can be acquired. This eliminates the need for the worker to move close to the IC tag and bring the communication unit close to the IC tag, greatly reducing the workload. Then, the calculation device, to which the detection result is input as the acquired data, determines the internal state of the marine hose due to the detection indicator based on the magnitude of the difference between the acquired data and preset reference data. The calculation device determines the external state of the marine hose based on the difference between the image data acquired by the camera device while the drone is in the airspace above the marine hose and preset reference image data. These make it easier to grasp the internal and external states of the marine hose.

### Brief Description of Drawings

FIG. 1 is an explanatory diagram illustrating an embodiment of a monitoring system.
FIG. 2 is an explanatory diagram illustrating an example of a portion of the marine hose in FIG. 1 enlarged in a longitudinal cross-sectional view.
FIG. 3 is an explanatory diagram illustrating part of the marine hose in a cross-sectional view taken along a line A-A of FIG. 2.
FIG. 4 is an explanatory diagram illustrating a detector of FIG. 2 enlarged in a longitudinal cross-sectional view.
FIG. 5A is an explanatory diagram illustrating reference image data of the marine hose, and FIG. 5B is an explanatory diagram illustrating image data of the marine hose acquired by a camera device.
FIG. 6A is an explanatory diagram illustrating other reference image data of the marine hose, and FIG. 6B is an explanatory diagram illustrating other image data of the marine hose acquired by the camera device.
FIG. 7 is an explanatory diagram illustrating a configuration of the monitoring system in which a calculation device and terminal devices are connected through a communication network.
FIG. 8 is an explanatory diagram illustrating part of another marine hose, to which a monitoring system is applied, enlarged in a longitudinal cross-sectional view.
FIG. 9 is an explanatory diagram illustrating part of the marine hose in a cross-sectional view taken along a line B-B of FIG. 8.
FIG. 10 is an explanatory diagram illustrating a casing and a sensor unit of FIG. 8 enlarged in a longitudinal cross-sectional view.
FIG. 11 is an explanatory diagram illustrating the detector in a top view.
FIG. 12 is an explanatory diagram illustrating a detector of FIG. 11 in a side view.
FIG. 13 is an explanatory diagram illustrating the arrangement of a loop circuit in a top view, with part of the marine hose cut away.
FIG. 14 is an explanatory diagram illustrating another arrangement of loop circuits in a top view, with part of the marine hose cut away.
FIG. 15 is a cross-sectional view taken along a line C-C of FIG. 14.

### Description of Embodiments

A system for monitoring a marine hose (hereinafter referred to as a monitoring system) and a monitoring method of the present invention will be described below, based on embodiments illustrated in the drawings.

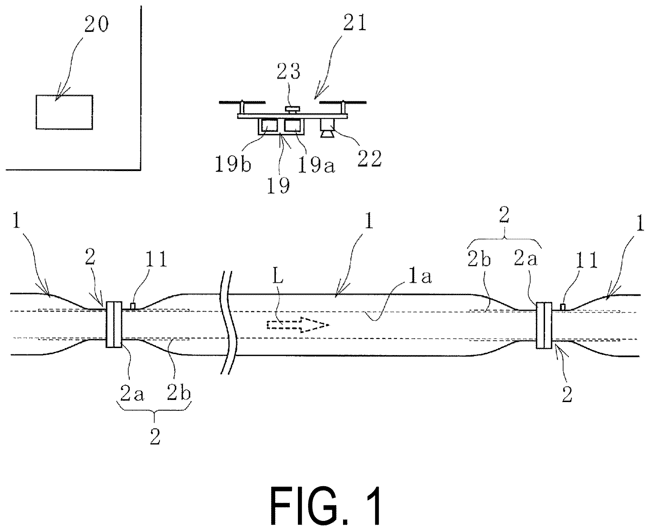

An embodiment of the monitoring system illustrated in FIG. 1 is applied to a floating marine hose 1 that is used while floating on the water surface, and grasps the internal and external states of the marine hose 1. The marine hose 1 is composed of a cylindrical hose body and connection fittings 2 connected to both ends of this hose body in the longitudinal direction. Each connection fitting 2 includes a nipple 2b extending in the longitudinal direction of the hose body and a flange 2a joined to one end of the nipple 2b in the longitudinal direction. The marine hoses 1 are connected to each other via the connection fittings 2, and usually about 10 marine hoses 1 are connected together for use.

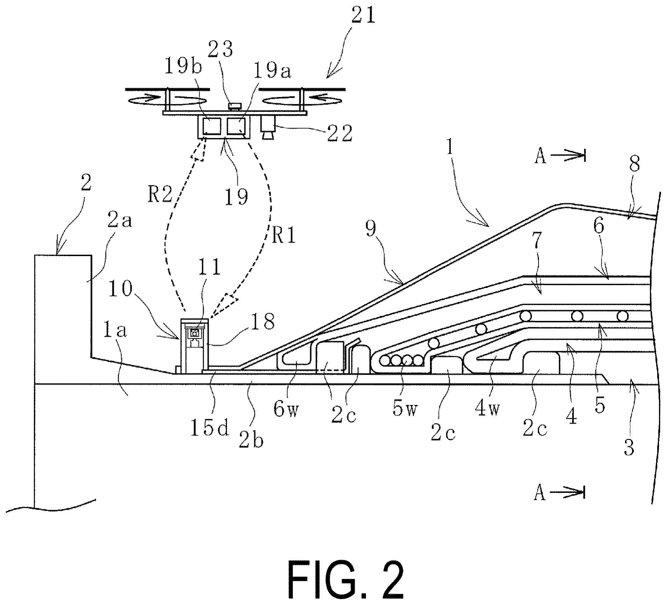

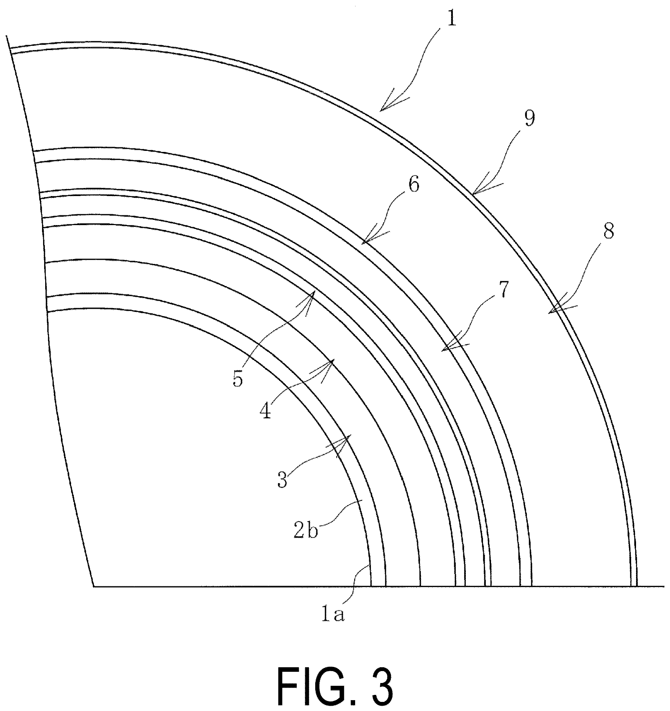

As illustrated in FIGS. 2 and 3, in the hose body of the marine hose 1, an inner surface layer 3, a first reinforcing layer 4, a body wire layer 5, a fluid retention layer 7, a second reinforcing layer 6, a buoyant layer 8, and an outer surface layer 9 are layered in order from the inner circumferential side toward the outer circumferential side. This marine hose 1 is of a double carcass type having the first reinforcing layer 4 and the second reinforcing layer 6 layered at a distance in the radial direction of the hose body with the fluid retention layer 7 interposed therebetween. Note that the body wire layer 5 can be discretionarily provided. The region on the inner circumferential side of the inner surface layer 3 serves as a flow path 1a for a fluid L. Examples of the fluid L include crude oil, heavy oil, gasoline, LPG, water, seawater, chemicals (alcohols refined from gasoline), and the like.

The inner surface layer 3 is made of a material appropriately selected depending on the type of the fluid L, and has excellent durability and erosion resistance against the fluid L. When the fluid L is crude oil, heavy oil, gasoline, or the like, the inner surface layer 3 is made of nitrile rubber or the like having excellent oil resistance.

Each of the first reinforcing layer 4 and the second reinforcing layer 6 is formed by layering a plurality of reinforcing cord layers, each of which has a large number of reinforcing cords arranged in parallel and covered with rubber. The body wire layer 5 is configured by spirally winding a metal wire around the outer circumferential surface of the first reinforcing layer 4 at predetermined intervals. The first reinforcing layer 4, the body wire layer 5, and the second reinforcing layer 6 are fixed to the nipples 2b at both end portions of the hose body using nipple wires 4w, 5w, and 6w at both end portions of the first reinforcing layer 4, the body wire layer 5, and the second reinforcing layer 6, fixing rings 2c protruding from the outer circumferential surfaces of the nipples 2b, and the like. The fluid retention layer 7 formed between the first reinforcing layer 4 and the second reinforcing layer 6 is a space for retaining the fluid L leaked from the flow path 1a.

The buoyant layer 8 is made of a material such as sponge rubber, polyurethane foam or the like that exhibits buoyancy to float the marine hose 1 above the sea. The outer surface layer 9 is made of a non-water-permeable material such as rubber, and has a highly visible reference line RL and the like marked on the surface thereof.

This monitoring system includes the marine hose 1, a detector 10, a drone 21 installed with a communication unit 19 and a camera device 22, and a calculation device 20. In this embodiment, the calculation device 20 is located at a location remote from the place where the marine hose 1 is used, and the communication unit 19 and the calculation device 20 are configured separately and independently. However, the communication unit 19 and the calculation device 20 may be configured to be integrated and installed on the drone 21.

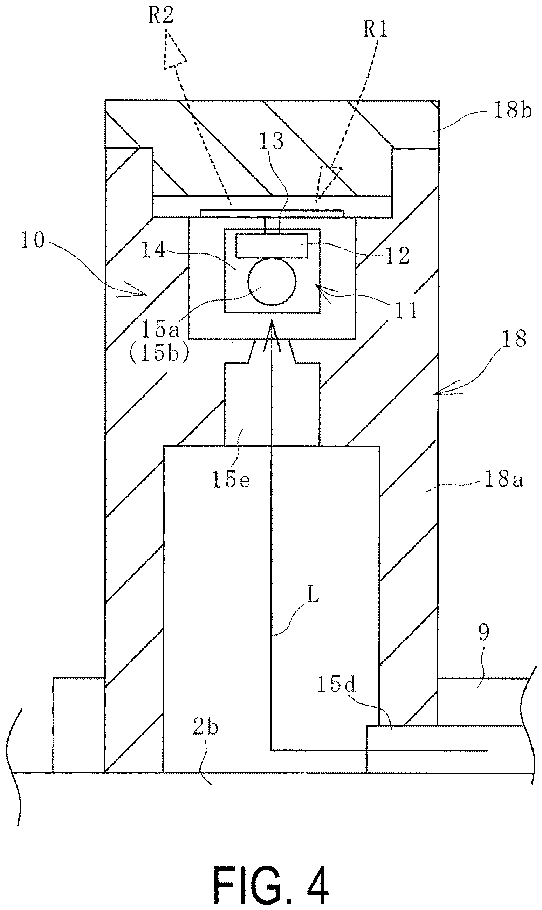

As illustrated in FIG. 4, the detector 10 includes a passive IC tag 11 and a sensor unit 15 connected to the IC tag 11. The IC tag 11 is positioned on the surface of the marine hose 1 and located above the water. The detector 10 is configured to detect a preset detection indicator ix inside the hose body. In this embodiment, this detection indicator ix is a pressure value between the inner surface layer 3 and the second reinforcing layer 6 (the fluid retention layer 7), and a pressure sensor 15a is used as the sensor unit 15. In this monitoring system, the presence or absence of leakage of the fluid L from the flow path 1a is determined by the calculation device 20 as the internal state of the marine hose 1 due to this detection indicator ix.

The IC tag 11 includes an IC chip 12 and an antenna unit 13 connected to the IC chip 12. The pressure sensor 15a is connected to the IC tag 11 (the IC chip 12). The size of the IC chip 12 is very small, for example, with a vertical dimension and a horizontal dimension of 50 mm or less (equivalent to an outer diameter of 50 mm or less) and a thickness of 5 mm or less. The size of the antenna unit 13 is also very small, for example, with a vertical dimension and a horizontal dimension of 50 mm or less (equivalent to an outer diameter of 50 mm or less) and a thickness of 10 mm or less. In this embodiment, a ceramic antenna is used as the antenna unit 13, making the antenna unit 13 very compact.

The IC chip 12 optionally stores tag-specific information such as the identification number of the IC tag 11 and other necessary information. The IC tag 11 adopts commonly available specifications, and for example, an RFID tag can be used as the IC tag 11.

The IC tag 11 is preferably placed at an end portion of the marine hose 1 in the longitudinal direction. In this embodiment, the IC tag 11 is placed on the surface of the connection fitting 2 at one end portion of the hose body in the longitudinal direction (the outer circumferential surface of the nipple 2b). In detail, as illustrated in FIG. 4, the IC tag 11 and the pressure sensor 15a are placed inside a casing 18. The casing 18 includes a cylindrical base part 18a and a lid part 18b attached to an upper end portion of the base part 18a.

The base part 18a is erected on the outer circumferential surface of the nipple 2b covered with the outer surface layer 9. The base part 18a is formed of a metal such as stainless steel. The lid part 18b is screwed with the upper end portion of the base part 18a to watertightly seal the upper end opening, and the IC tag 11 and the pressure sensor 15a are located in a watertightly sealed internal space of the casing 18. The lid part 18b is made of a material that transmits a transmission radio wave R1 and a return radio wave R2, and examples of such materials include polycarbonate, polyamide, and epoxy resin. The casing 18 (the lid part 18b) may be colored, for example, orange, so as to be easily noticeable in the ocean.

A check valve 15e is provided in the lower portion of the internal space in which the IC tag 11 and the pressure sensor 15a are located. A communication pipe 15d communicating with the fluid retention layer 7 is connected to the lower end portion of the base part 18a. Accordingly, the lower space of the base part 18a communicates with the fluid retention layer 7, but the check valve 15e is interposed between the lower space of the base part 18a and the internal space in which the IC tag 11 and the pressure sensor 15a are located, making this internal space a pressure holding chamber.

The check valve 15e allows only the flow of the fluid L and gas to the pressure holding chamber, and restricts the flow from the pressure holding chamber to the communication pipe 15d side. Thus, when the pressure value in the pressure holding chamber increases, this pressure state is maintained. A known check valve can be used as the check valve 15e.

The pressure sensor 15a detects the pressure value in the pressure holding chamber, and the detected pressure value is then input to the calculation device 20 as acquired data Dr by the communication unit 19. A known pressure sensor can be used as the pressure sensor 15a. The size of the pressure sensor unit 15a is about the same as that of the IC chip 12. The IC chip 12 and the pressure sensor 15a are suspended in the drawing, but the IC chip 12 and the pressure sensor 15a may be placed flat as the antenna unit 13.

As illustrated in FIG. 2, the communication unit 19 includes a radio wave transmission unit 19a and a radio wave reception unit 19b. The radio wave transmission unit 19a transmits the transmission radio wave R1 to the IC tag 11. The transmission radio wave R1 received by the antenna unit 13 generates power in the IC tag 11, which activates the IC tag 11. The IC tag 11 uses this power to transmit the return radio wave R2 through the antenna unit 13, and this return radio wave R2 is received by the radio wave reception unit 19b. Thus, wireless communication is performed between the IC tag 11 and the communication unit 19 by transmitting the return radio wave R2 in response to the transmission radio wave R1.

The communication unit 19 can employ commonly distributed specifications that allow wireless communication with a passive RFID tag. Thus, the IC tag 11 and the communication unit 19 constitute a radio frequency identification (RFID) system. Since the passive IC tag 11 is used, the communication distance of the radio waves R1 and R2 between the IC tag 11 and the communication unit 19 is, for example, several tens of centimeters to several meters.

The frequency of the radio waves (R1 and R2) used for wireless communication between the IC tag 11 and the communication unit 19 is mainly in the UHF band (depending on the country, range of 860 MHz or higher and 930 MHz or lower, range of 915 MHz or higher and 930 MHz or less in Japan), and the HF band (13.56 MHz) may be used.

The camera device 22 acquires image data of the marine hose 1 from the airspace above the marine hose 1. As the camera device 22, various known digital cameras and the like that acquire image data Mr of still images or moving images can be adopted.

The drone 21 can employ known specifications that allow the drone 21 to fly to a desired position and hover in a fixed position while installed with the communication unit 19 and the camera device 22 described above. The drone 21 is equipped with a GNSS receiver 23, and the position coordinates of the drone 21 are grasped in real time by a GNSS. By inputting the position coordinates of the desired position into a control unit of the drone 21, the drone 21 can be flown to the desired position by automatic control operation.

A known computer is used as the calculation device 20, and the calculation device 20 executes various computational processing using the input data. The calculation device 20 receives the acquired data Dr by the communication unit 19 and the image data Mr by the camera device 22.

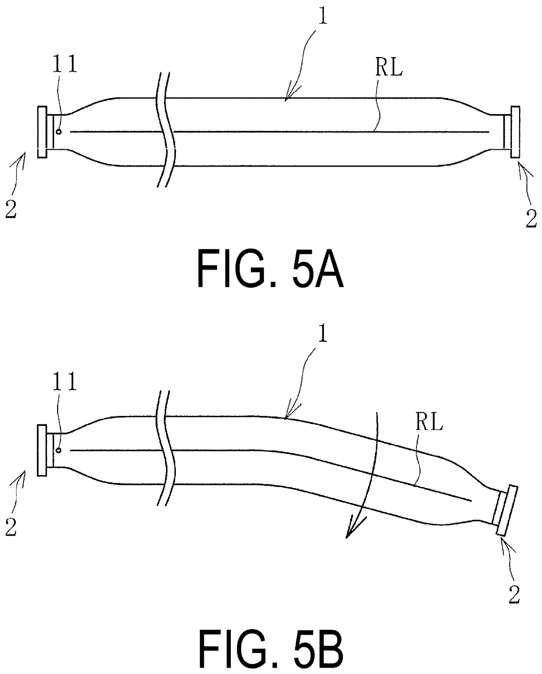

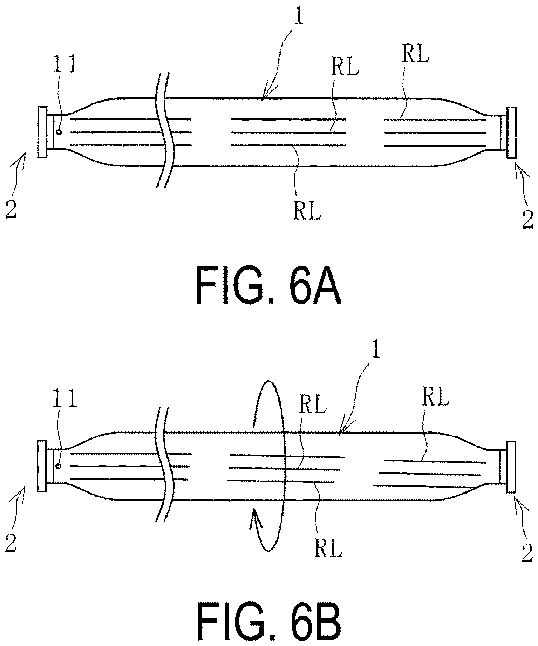

The calculation device 20 has already received reference image data Mc that indicates a state in which the sound marine hose 1 is not twisted and extends linearly, as illustrated in FIGS. 5(A) and 6(A). The reference image data Mc may be image data actually photographed from the airspace above the marine hose 1, or data prepared from design data or the like. The line RL marked on the surface of the marine hose 1 is a reference line RL marked so as to extend parallel to the axial center of the marine hose 1. For example, the linearity of the reference line RL and the like may be used as the reference image data Mc. An output means such as a monitor is connected to the calculation device 20.

An example of a procedure for grasping the internal and external states of the marine hose 1 using this embodiment of the monitoring system will be described below.

As illustrated in FIG. 1, the drone 21 is flown from a measurement base located, for example, on land or on a ship, and moved into the airspace above and near the IC tag 11 placed on the surface of the marine hose 1. For example, based on the position information of the marine hose 1 grasped in advance, the GNSS receiver 23 installed on the drone 21 is used to move the drone 21 to the airspace above the IC tag 11 by automatic operation. When wireless communication is to be performed between the IC tag 11 and the communication unit 19, the drone 21 continues to be positioned in the airspace above and near the IC tag 11 by automatic operation, and the separation distance between the IC tag 11 and the communication unit 19 is maintained at about one meter. Alternatively, the drone 21 can be positioned in the airspace above and near the IC tag 11 by operation from a drone operator based on image data acquired in real time by the camera device 22.

As illustrated in FIG. 2, with the drone 21 (the communication unit 19) positioned in the airspace above and near the IC tag 11, the IC tag 11 is activated by the transmission radio wave R1 transmitted from the radio wave transmission unit 19a. The return radio wave R2 transmitted from the IC tag 11 in response to the transmission radio wave R1 is received by the radio wave reception unit 19b, and wireless communication is performed between the IC tag 11 and the communication unit 19.

When the IC tag 11 is activated, the pressure value detected by the pressure sensor 15a as the detection result of the detection indicator ix by the detector 10 is transmitted from the IC tag 11 to the communication unit 19 by the return radio wave R2 and is input to the calculation device 20 as the acquired data Dr. The calculation device 20 determines the presence or absence of leakage of the fluid L from the flow path 1a as the internal state of the marine hose 1 due to the detection indicator ix based on the magnitude of the difference between the input acquired data Dr and the preset reference data Dc.

Here, the internal pressure data in the fluid retention layer 7 in a sound state in which the fluid L does not leak from the flow path 1a is grasped in advance by performing a preliminary test or the like, and is set as the reference data Dc. When the fluid L leaking from the flow path 1a flows into the fluid retention layer 7, the internal pressure of the fluid retention layer 7 increases. Therefore, for example, the calculation device 20 determines that the fluid L leaks from the flow path 1a when the acquired data Dr exceeds a tolerance range of the reference data Dc (e.g., 1.1 times or more the reference data Dc), and determines that the fluid L does not leak when the acquired data Dr is within this tolerance range. This tolerance range may be appropriately set based on the results of the preliminary test.

Further, as illustrated in FIG. 1, while the drone 21 is in the airspace above the marine hose 1, the camera device 22 acquires the image data Mr of the marine hose 1. As illustrated in FIGS. 5(B) and 6(B), it is preferable to acquire the image data Mr that covers the entire length of the marine hose 1 (hose body). The timing of acquiring the image data Mr may be before or after performing wireless communication between the IC tag 11 and the communication unit 19.

The acquired image data Mr is input to the calculation device 20. The calculation device 20 determines the external state of the marine hose 1 based on the difference between the acquired image data Mr and the preset reference image data Mc. For example, the reference lines RL of the reference image data Mc illustrated in FIG. 5A and the acquired image data Mr illustrated in FIG. 5B are compared. The calculation device 20 determines that an abnormal bend has occurred in the marine hose 1 when the degree of deviation (degree of bend) of the reference line RL in FIG. 5B relative to the reference line RL in FIG. 5A exceeds a preset tolerance range, and determines that no abnormal bend has occurred when the degree of deviation is within this tolerance range. By superimposing the reference image data Mc in FIG. 5A and the image data Mr in FIG. 5B, the degree of bend of the marine hose 1 can be easily calculated by the calculation device 20. The bend radius of the reference line RL in the image data Mr may be calculated by the calculation device 20 and compared with the straight line (i.e., the bend radius is infinite) of the reference line RL as the reference image data Mc. Alternatively, the contours of the hose bodies of the reference image data Mc and the image data Mr may be compared.

Alternatively, the reference lines RL of the reference image data Mc in FIG. 6A and the acquired image data Mr in FIG. 6B are compared. The calculation device 20 determines that an abnormal twist has occurred in the marine hose 1 when the degree of circumferential deviation (degree of twist) of the reference lines RL in FIG. 6B relative to the reference lines RL in FIG. 6A exceeds a preset tolerance range, and determines that no abnormal twist has occurred when the degree of circumferential deviation is within this tolerance range. By superimposing the reference image data Mc in FIG. 6A and the image data Mr in FIG. 6B, the degree of twist of the marine hose 1 can be easily calculated by the calculation device 20. It is more preferable to determine the presence or absence of abnormalities in both the degree of bend of the marine hose 1 illustrated in FIG. 5 and the degree of twist of the marine hose 1 illustrated in FIG. 6, rather than just one of them, to grasp the external state of the marine hose 1.

A temperature sensor 15b may be used in addition to or instead of the pressure sensor 15a described above. That is, by using the temperature sensor 15b, the detection indicator ix is set to the temperature between the inner surface layer 3 and the second reinforcing layer 6 (the fluid retention layer 7). Then, the presence or absence of abnormal heating inside the marine hose 1 is grasped as the internal state of the marine hose 1 due to the detection indicator ix. The temperature sensor 15b may be located inside the casing 18 closer to the communication pipe 15d than the check valve 15e, or may be located inside the fluid retention layer 7. The calculation device 20 determines the presence or absence of abnormal heating of the inside the marine hose 1, as the internal state of the marine hose 1, based on the magnitude of the difference between the input acquired data Dr (the temperature data from the temperature sensor 15b) and the preset reference data Dc (the reference temperature data).

According to this monitoring system, when wireless communication is to be performed between the IC tag 11 and the communication unit 19, the drone 21 is moved into the airspace above and near the IC tag 11. Therefore, the worker does not need to move close to the IC tag 11 to bring the communication unit 19 close to the IC tag 11, making the work much lighter. Since the calculation device 20 determines the internal state of the marine hose 1 due to the detection indicator ix, the internal state of the marine hose can be more easily grasped based on the determination result. Since the calculation device 20 determines the external state of the marine hose 1 based on the difference between the image data Mr of the marine hose 1 from the upper airspace acquired by the camera device 22 and the reference image data Mc, the external state of the marine hose 1 can be more easily grasped based on the determination result.

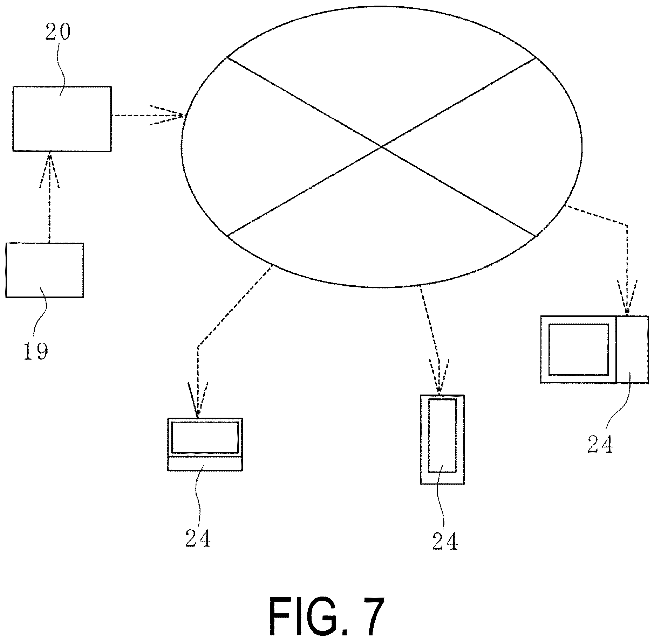

As illustrated in FIG. 7, the calculation device 20 may be configured to be connected to desired terminal devices 24 via a communication network such as the Internet. For example, various pieces of information (data) are transmitted from the calculation device 20 to the terminal devices 24 of relevant parties such as a control room of an operating company (user) of the marine hose 1, a sales company of the marine hose 1, or a manufacturing company, which are located remotely from the location where the marine hose 1 is used. The information transmitted to the terminal devices 24 includes, for example, the acquired data Dr by the communication unit 19, the determination result from the calculation device 20 regarding the internal state of the marine hose due to the detection indicator ix, the image data Mr acquired by the camera device 22, and the determination result by the calculation device 20 regarding the external state of the marine hose 1. According to this configuration, the relevant persons having these terminal devices 24 can grasp the internal and external states of the marine hose 1 while being remotely located to the place where the marine hose 1 is used.

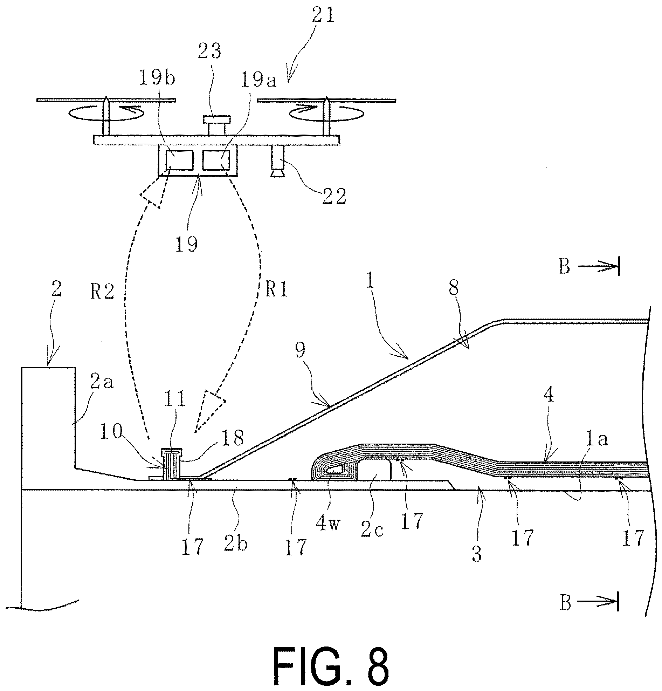

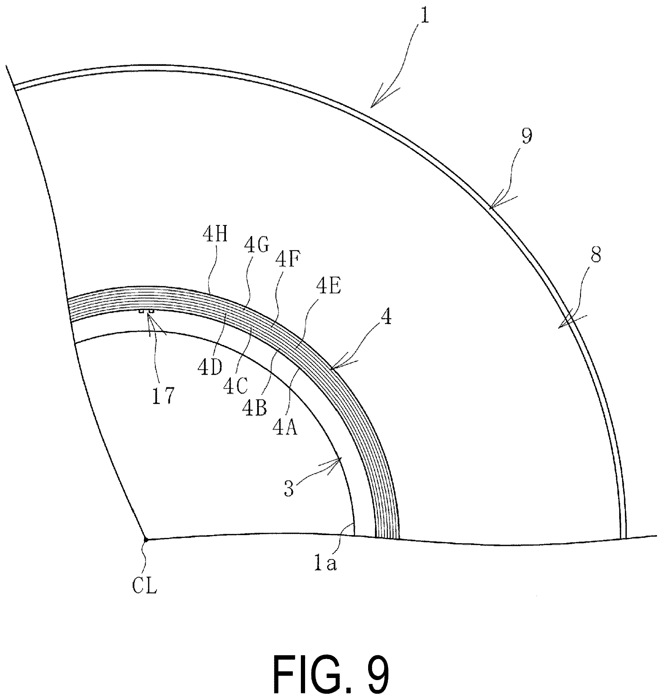

In a hose body of a marine hose 1 to which an embodiment of a monitoring system illustrated in FIGS. 8 to 10 is applied, an inner surface layer 3, a first reinforcing layer 4, a buoyant layer 8, and an outer surface layer 9 are layered in order from the inner circumferential side toward the outer circumferential side. This marine hose 1 does not have a fluid retention layer 7 and is therefore of a single carcass type.

The first reinforcing layer 4 is configured by layering a plurality of reinforcing cord layers 4A to 4H, each of which has a large number of reinforcing cords arranged in parallel and covered with rubber. In this embodiment, one reinforcing cord layer group in which eight reinforcing cord layers 4A to 4H are layered is the first reinforcing layer 4. However, the number of layered reinforcing cord layers 4A to 4H is appropriately determined based on performances required for the marine hose 1.

This embodiment of the monitoring system further differs from the previous embodiment in the configuration of a detector 10, but other configurations are substantially the same. In this embodiment, this detection indicator ix is an electrical resistance value between the inner surface layer 3 and the second reinforcing layer 6, and a detection element 15c is used as a sensor unit 15. In this monitoring system, the presence or absence of leakage of the fluid L from the flow path 1a is determined by the calculation device 20 as the internal state of the marine hose 1 due to this detection indicator ix.

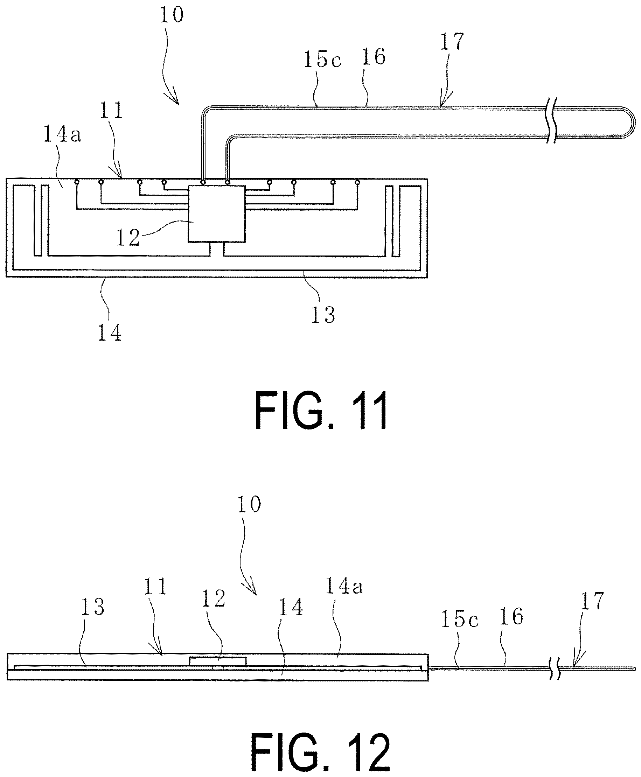

As illustrated in FIGS. 11 and 12, the detector 10 used in this embodiment includes a passive IC tag 11 and a loop circuit 17 connected to the IC tag 11. The IC tag 11 is positioned on the surface of the marine hose 1 and located above the water. The loop circuit 17 is formed by the detection element 15c and extends continuously between the inner surface layer 3 and the first reinforcing layer 4 in the longitudinal direction of the hose body.

In detail, the IC tag 11 includes an IC chip 12 and an antenna unit 13 connected to the IC chip 12. The IC chip 12 and the antenna unit 13 are located on a substrate 14. The IC chip 12 and the antenna unit 13 are covered with an insulating layer 14a, and the entire IC tag 11 is electrically insulated from the outside. However, the IC tag 11 and the detection element 15c are electrically connected. The insulating layer 14a is made of a known insulating material such as insulating rubber, resin such as polyester, or natural fiber.

The IC chip 12 optionally stores tag-specific information such as the identification number of the IC tag 11, element identification information for identifying the detection element 15c connected to the IC tag 11, and other necessary information. The antenna unit 13 may be of any of various known types. In this embodiment, a dipole antenna extending left-right symmetrically from the IC chip 12 is employed.

The detection element 15c is a conductive linear member, and is formed of conductive rubber or conductive paste (paste containing metal particles) whose electrical resistance value changes when impregnated with the fluid L flowing through the flow path 1a. The detection element 15c has an outer diameter (width) of, for example, approximately, 1 mm or more and 20 mm or less, more preferably 5 mm or more and 10 mm or less. The detection element 15c may be a simple wire having a circular cross-section, but is preferably a flattened linear member (band-like wire).

The outer circumferential surface of the detection element 15c is covered with an insulator 16, so that the detection element 15c is electrically insulated from the outside. The insulator 16 is made of a known insulating material, similar to the insulating layer 14a. However, the insulator 16 is formed of a material that the fluid L can permeate, or has through holes, so that the fluid L can pass through the insulator 16 and reach the detection element 15c.

One end portion and the other end portion of the detection element 15c in the longitudinal direction are electrically connected to the IC chip 12 to form the loop circuit 17 outside the IC tag 11. The distance between the detection elements 15c extending in parallel in the loop circuit 17 is, for example, 5 mm or more and 50 mm or less. The IC tag 11 (the substrate 14) is provided with a large number of pairs of terminals connected to the IC chip 12. One end portion and the other end portion of the detection element 15c in the longitudinal direction are connected to this pair of respective terminals and are thus electrically connected to the IC chip 12. The detection element 15c and the pair of terminals are connected by using eyelets and crimp terminals or by a conductive adhesive, welding, solder, or the like. In this embodiment, five pairs of terminals are provided; however, the number of pairs of terminals provided on the IC tag 11 (the substrate 14) is not particularly limited and may be one pair of terminals. Since a space is restricted, the number of pairs of terminals provided on one IC tag 11 (substrate 14) is, for example, about one to six pairs of terminals.

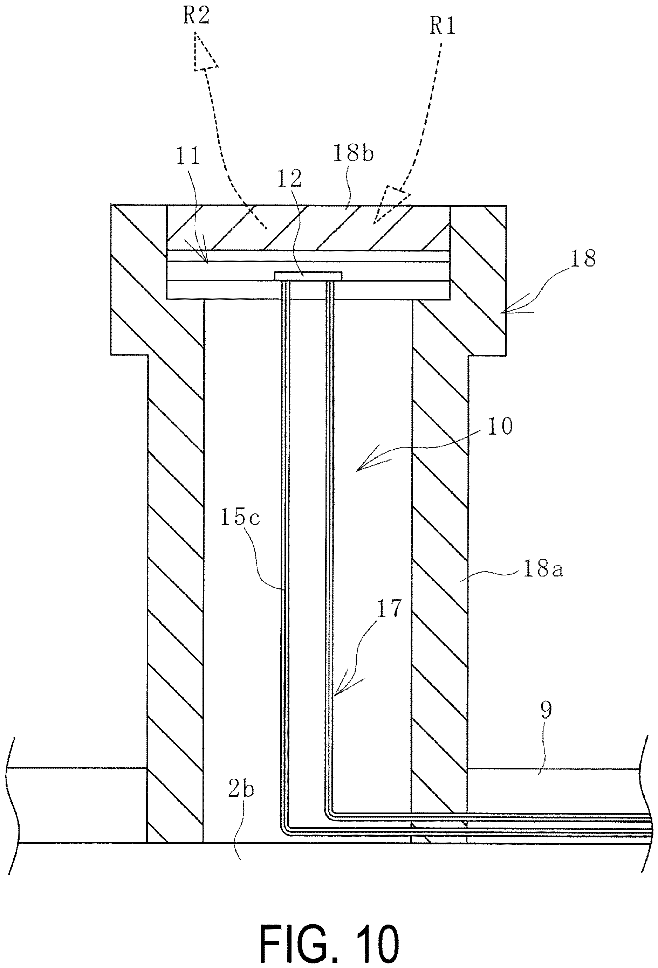

The loop circuit 17 (the detection element 15c) preferably extends continuously from one end portion to the other end portion of the hose body in the longitudinal direction so as to cover the entire length of the hose body. In this embodiment, the IC tag 11 is placed inside the casing 18 as illustrated in FIG. 10. A lid part 18b is screwed with the upper end portion of a base part 18a to watertightly seal the upper end opening, and the IC tag 11 is located in the watertightly sealed internal space of the casing 18.

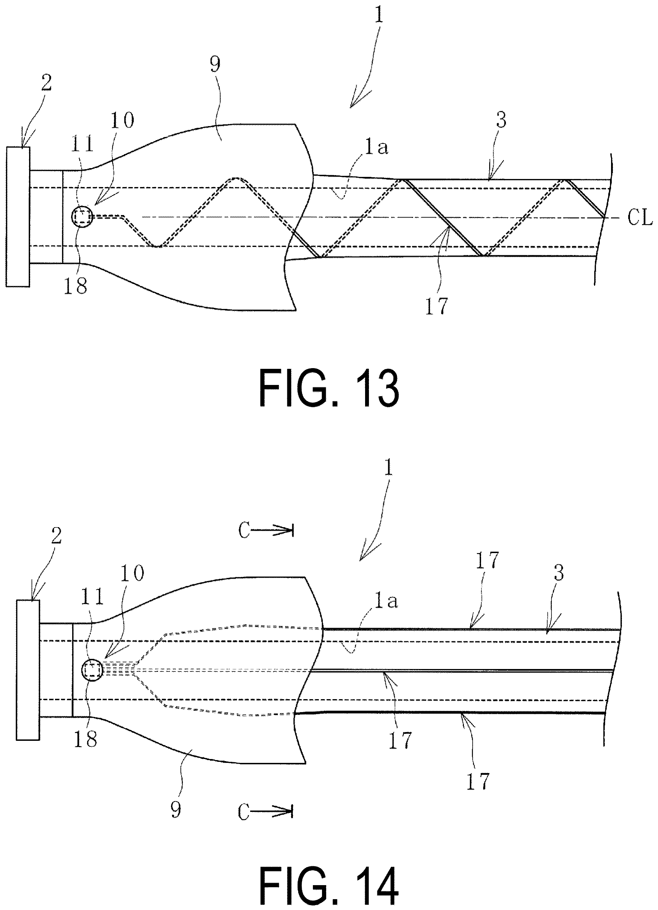

The detection element 15c (the loop circuit 17) extends from the inside of the casing 18 toward the hose body, and in the hose body, the detection element 15c (the loop circuit 17) is located between the inner surface layer 3 and the first reinforcing layer 4 and extends continuously from one end portion to the other end portion of the hose body in the longitudinal direction. In this embodiment, as illustrated in FIG. 13, the loop circuit 17 is spirally wound around the hose body and extends from one end portion to the other end portion of the hose body in the longitudinal direction. That is, the loop circuit 17 is spirally wound around the outer circumferential surface of the inner surface layer 3. The spiral pitch of the loop circuit 17 is, for example, 20 cm or more and 50 cm or less. A dot-dash line CL in the figure is an axial center passing through a cross-sectional center CL of the marine hose 1 (hose body). By extending the loop circuit 17 in a spiral shape in this manner, there is an advantage that even one loop circuit 17 can efficiently cover the entire range of the hose body.

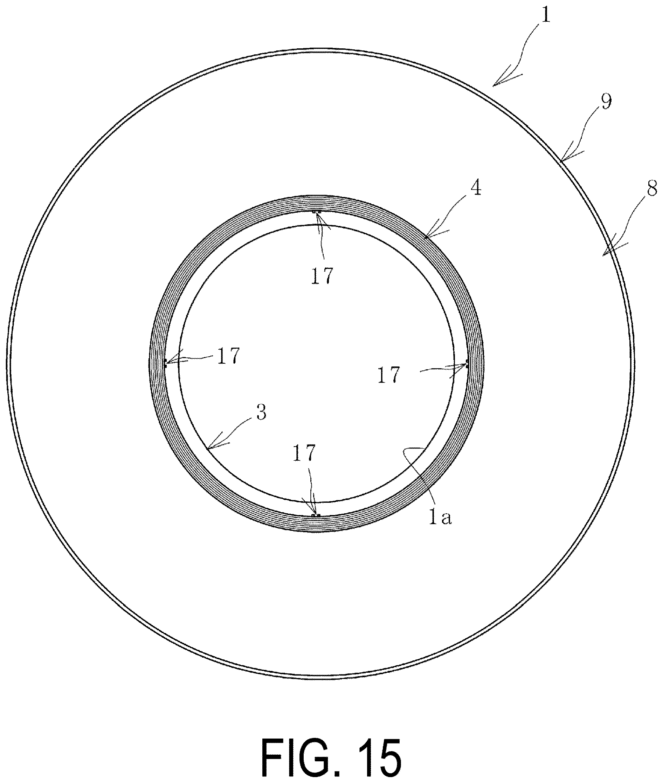

As illustrated in FIGS. 14 and 15, a plurality of independent loop circuits 17 may be arranged at intervals in the circumferential direction of the hose body and linearly extend in the longitudinal direction of the hose body. The loop circuits 17 are preferably arranged at equal intervals in a circumferential direction of the hose body. The specifications illustrated in FIGS. 14 and 15 have an advantage that even when one loop circuit 17 fails for some reason, the presence or absence of leakage of the fluid L can be detected by the other loop circuits 17. The entire length of each loop circuit 17 can be shorter than when the loop circuit 17 extends in a spiral shape, which is advantageous for detecting changes in the electrical resistance value in each loop circuit 17 more sensitively (with high sensitivity).

An example of a procedure for grasping the internal state of the marine hose 1 using this embodiment of the monitoring system will be described below. Since this embodiment is substantially the same as the previous embodiment except that the detection indicator ix is different from that in the previous embodiment, only the differences from the previous embodiment will be described. The procedure for grasping the external state of the marine hose 1 is the same as in the previous embodiment.

When the antenna unit 13 receives a transmission radio wave R1 transmitted from a radio wave transmission unit 19a and the IC tag 11 is activated, a current flows through the loop circuit 17. The electrical resistance value data in this loop circuit 17 is transmitted from the IC tag 11 to the communication unit 19 by a return radio wave R2 as the detection result of the detection indicator ix by the detector 10. This electrical resistance value data is received by the radio wave reception unit 19b, and then input to the calculation device 20 as acquired data Dr by the communication unit 19.

The calculation device 20 determines the presence or absence of leakage of the fluid L from the flow path 1a based on the magnitude of the difference between the input acquired data Dr and the reference resistance value data that is preset as reference data Dc. When the inner surface layer 3 is sound and the fluid L does not leak from the inner surface layer 3, the acquired data Dr and the reference data Dc are substantially the same and hardly differ.

On the other hand, when the inner surface layer 3 is damaged and the fluid L leaks from the flow path 1a to the outside of the inner surface layer 3, the fluid L comes into contact with the detection element 15c forming the loop circuit 17, causing the electrical resistance value of the loop circuit 17 to rapidly fluctuate largely (become extremely large), resulting in an insulating state or a state close to being insulating. That is, the electrical resistance value data (the acquired data Dr) of the loop circuit 17 when the IC tag 11 is activated becomes significantly larger than the reference data Dc.

The calculation device 20 then compares the input acquired data Dr with the reference data Dc. As a result, the calculation device 20 determines that the fluid L leaks from the flow path 1a when the acquired data Dr is larger than the reference data Dc by exceeding a tolerance range, and determines that the fluid L does not leak when the acquired data Dr is within this tolerance range.

The embodiment illustrated in FIGS. 8 to 15 can be applied not only to the marine hose 1 of a single carcass type but also to the marine hose 1 of a double carcass type having the fluid retention layer 7 in the hose body. In the marine hose 1 of the double carcass type, the loop circuit 17 may be placed on the outer circumferential surface of the inner surface layer 3 as described above, but may be placed in the fluid retention layer 7. When the loop circuit 17 is placed in the fluid retention layer 7, the loop circuit 17 may extend continuously from one end of the hose body in the longitudinal direction to a position that is, for example, 20% or more and 50% or less of the entire length of the hose body. This is because when the fluid L flows into part of the fluid retention layer 7, the fluid L gradually spreads over the entire length of the fluid retention layer 7.

The calculation device 20 may be configured to associate the acquired image data Mr with the detection result from the detector 10, and determine the presence or absence of leakage of the fluid L from the flow path 1a based on the difference between the image data Mr and the reference image data Mc. That is, when determining the presence or absence of leakage of the fluid L from the flow path 1a, not only the detection result of the detection indicator ix detected by the detector 10 but also the image data Mr can be used.

For example, when the detection element 15c is bent due to local bend of the marine hose 1, the electrical resistance value of the detection element 15 increases to some extent. Therefore, it is ambiguous whether the change in the electrical resistance value of the detection element 15c is due to the impregnation of the detection element 15c with the fluid L or due to the bend of the detection element 15c. That is, when the presence or absence of leakage of the fluid L from the flow path 1a is determined based solely on the electrical resistance value data (the acquired data Dr) in the loop circuit 17 detected by the detector 10, it is disadvantageous to determine the presence or absence of leakage of the fluid L with high accuracy.

Therefore, based on the difference between the image data Mr of the marine hose 1 from the upper airspace acquired by the drone 21 and the reference image data Mc, it is determined whether the image data Mr is taken into consideration when determining the presence or absence of leakage of the fluid L. When the difference between the image data Mr and the reference image data Mc (degree of bend) is small and within the tolerance range, it is considered that the bend state of the marine hose 1 does not affect the magnitude of the electrical resistance value data (the acquired data Dr) in the loop circuit 17, and the image data Mr is ignored. Then, the presence or absence of leakage of the fluid L from the flow path 1a is determined based only on the magnitude of the difference between the acquired data Dr input to the calculation device 20 and the reference data Dc.

On the other hand, when the difference between the image data Mr and the reference image data Mc (degree of bend) is large and exceeds the tolerance range, it is considered that the bend state of the marine hose 1 affects the magnitude of the electrical resistance value data (the acquired data Dr) in the loop circuit 17. Then, in consideration of the image data Mr, the presence or absence of leakage of the fluid L from the flow path 1a is determined based on the magnitude of the difference between the acquired data Dr input to the calculation device 20 and the reference data Dc. This tolerance range is determined by conducting a preliminary test or the like to determine an appropriate range. When the image data Mr is taken into consideration, for example, the electrical resistance value data (the acquired data Dr) is multiplied by a coefficient (< 1) in accordance with the bend radius of the marine hose 1 in the image data Mr. The smaller the bend radius of the marine hose 1 in the image data Mr, the smaller the coefficient to be multiplied, to offset the effect of the bending of the marine hose 1 that increases the electrical resistance value data (the acquired data Dr). This coefficient may also be set by grasping an appropriate value through a preliminary test or the like.

### Reference Signs List

1 Marine hose
1a Flow path
2 Connection fitting
2a Flange
2b Nipple
2c Fixing ring
3 Inner surface layer
4 First reinforcing layer
4A to 4H Reinforcing cord layer
4w Nipple wire
5 Body wire layer
5w Nipple wire
6 Second reinforcing layer
6w Nipple wire
7 Fluid retention layer
8 Buoyant layer
9 Outer surface layer
10 Detector
11 IC tag
12 IC chip
13 Antenna unit
14 Substrate
14a Insulating layer
15 Sensor unit
15a Pressure sensor
15b Temperature sensor
15c Detection element
15d Communication pipe
15e Check valve
16 Insulator
17 Loop circuit
18 Casing
18a Base part
18b Lid part
19 Communication unit
19a Radio wave transmission unit
19b Radio wave reception unit
20 Calculation device
21 Drone
22 Camera device
23 GNSS receiver
24 Terminal device

## Claims

1. A system for monitoring a marine hose comprising a hose body in which a reinforcing layer and a buoyant layer are layered between an inner surface layer and an outer surface layer in order from an inner circumferential side and connection fittings connected to both respective end portions of the hose body in a longitudinal direction, the inner surface layer comprising an inner circumferential region as a flow path, the system comprising:
the marine hose;
a detector comprising an IC tag of a passive type and a sensor unit connected to the IC tag;
a drone on which a communication unit configured to wirelessly communicate with the IC tag and a camera device are installed; and
a calculation device into which acquired data from the communication unit and image data from the camera device are input;
the IC tag being placed on a surface of the marine hose, and the detector being configured to detect a detection indicator preset inside the hose body,
with the drone moved into airspace above and near the IC tag, the IC tag being activated by a transmission radio wave transmitted from the communication unit, and wireless communication being performed between the IC tag and the communication unit by a return radio wave being transmitted from the IC tag activated in response to the transmission radio wave,
when the IC tag is activated, a detection result regarding the detection indicator from the detector being transmitted from the IC tag to the communication unit through the return radio wave and being input into the calculation device as the acquired data,
the calculation device determining an internal state of the marine hose due to the detection indicator based on a magnitude of a difference between the acquired data input and preset reference data, and
the calculation device also determining an external state of the marine hose based on a difference between the image data acquired by the camera device while the drone is in airspace above the marine hose and preset reference image data.

2. The system for monitoring a marine hose according to claim 1, wherein
the detection indicator is at least one of a pressure value or an electrical resistance value between the inner surface layer and the reinforcing layer, and
presence or absence of leakage of a fluid from the flow path is determined as the internal state of the marine hose due to the detection indicator.

3. The system for monitoring a marine hose according to claim 2, wherein the calculation device associates the image data with the detection result and determines the presence or absence of leakage of the fluid from the flow path based on a difference between the image data and the reference image data.

4. The system for monitoring a marine hose according to any one of claims 1 to 3, wherein
the drone is moved into airspace above the IC tag by automatic operation based on position information of the marine hose grasped in advance, and
when wireless communication is performed between the IC tag and the communication unit, the drone is positioned in the airspace above and near the IC tag by automatic operation or by operation from a drone operator based on the image data acquired in real time by the camera device.

5. The system for monitoring a marine hose according to any one of claims 1 to 4, wherein
the calculation device is connected to a plurality of terminal devices through a communication network, and
the acquired data, a determination result from the calculation device regarding the internal state of the marine hose due to the detection indicator, the image data, and a determination result from the calculation device regarding the external state of the marine hose are transmitted from the calculation device to each of the terminal devices.

6. A method for monitoring a marine hose comprising a hose body in which a reinforcing layer and a buoyant layer are layered between an inner surface layer and an outer surface layer in order from an inner circumferential side and connection fittings connected to both respective end portions of the hose body in a longitudinal direction, the inner surface layer comprising an inner circumferential region as a flow path, the method comprising:
using a detector comprising an IC tag of a passive type and a sensor unit connected to the IC tag, a drone on which a communication unit configured to wirelessly communicate with the IC tag and a camera device are installed, and a calculation device into which acquired data from the communication unit and image data from the camera device are input;
placing the IC tag on a surface of the marine hose and the detector configured to detect a detection indicator preset inside the hose body;
with the drone moved into airspace above and near the IC tag, activating the IC tag with a transmission radio wave transmitted from the communication unit, and performing wireless communication between the IC tag and the communication unit by transmitting a return radio wave from the IC tag to the communication unit in response to the transmission radio wave;
when activating the IC tag, transmitting from the IC tag to the communication unit through the return radio wave and inputting a detection result regarding the detection indicator from the detector into the calculation device as the acquired data;
determining, by the calculation device, an internal state of the marine hose due to the detection indicator based on a magnitude of a difference between the acquired data input and preset reference data; and
also determining, by the calculation device, an external state of the marine hose based on a difference between the image data acquired by the camera device while the drone is in airspace above the marine hose and preset reference image data.
